# FASCICULE DE BREVET EUROPEEN

(11) **EP 3 839 161 B1**
(45) Date de publication et mention de la délivrance du brevet: **17.08.2022**
(21) Numéro de dépôt: 20206117.2
(22) Date de dépôt: 06.11.2020
(51) Int. Cl.: E03D 11/17, F16L 25/14

(54) **SYSTÈME DE RINÇAGE POUR CUVETTE DE WC ET ENSEMBLE CUVETTE DE WC - SYSTÈME DE RINÇAGE**
SPÜLSYSTEM FÜR WC-SCHÜSSEL, UND EINHEIT AUS WC-SCHÜSSEL UND SPÜLSYSTEM
FLUSHING SYSTEM FOR TOILET BOWL, AND TOILET BOWL AND FLUSHING SYSTEM ASSEMBLY

(30) Priorité: 17.12.2019 FR 1914559
(43) Date de publication de la demande: 23.06.2021
(73) Titulaire: Delabie, 80130 Friville Escarbotin (FR)
(72) Inventeur: DELABIE, Gérard, 80130 FRIVILLE-ESCARBOTIN (FR); VIEIRA RAMOS, Fernando, 80130 FRIVILLE-ESCARBOTIN (FR)
(74) Mandataire: Cabinet Chaillot

(56) Documents cités:
- US-A- 2 192 110
- US-A- 2 509 782
- US-A1- 2008 092 975
- US-A1- 2012 175 437

## Description

La présente invention concerne le domaine des cuvettes de wc, et porte en particulier sur un système de rinçage pour cuvette de wc et sur un ensemble cuvette de wc - système de rinçage.

Il existe de nombreux modèles de cuvettes de wc en céramique qui comportent une connexion à un tuyau de chasse pour amener de l'eau de rinçage en provenance d'un réservoir de chasse ou d'un robinet à fermeture automatique. La connexion du tuyau de chasse se fait généralement par un canal évasé pour recevoir un joint à lèvre en caoutchouc pour assurer l'étanchéité autour du tuyau, puis ledit canal se rétrécit et conduit l'eau de rinçage vers une gorge ménagée sur le pourtour intérieur de la cuvette de wc, juste en dessous de l'assise de la cuvette de wc, avec une fente ou des petits trous pour assurer un rinçage approprié de l'intérieur de la cuvette de wc.

Il existe également un autre principe de rinçage pour cuvette de wc sans gorge. Dans ce cas, le bol de la cuvette de wc comporte généralement, à quelques centimètres en dessous de l'assise, une partie étagée en forme de rampe, et l'eau de rinçage est dirigée vers cette rampe par un ou plusieurs tubes qui envoient un jet sensiblement horizontal vers ladite rampe. Le ou les tubes sont parfois remplacés par un diffuseur ou déflecteur, lequel peut être partie intégrante de la cuvette de wc, ou une pièce rapportée sur le bol de la cuvette de wc.

Cependant, ces dispositions existantes ont pour inconvénient de nécessiter des formes complexes de cuvette qui sont difficiles à maîtriser du fait du fort retrait de la céramique à la cuisson et des irrégularités de la surface émaillée, ce qui rend aléatoire la qualité du rinçage.

La demande de brevet européen EP2602391A1 divulgue une cuvette de wc comprenant un bol avec un répartiteur d'eau de rinçage disposé dans la région d'une entrée d'eau à l'arrière de la cuvette, ledit répartiteur d'eau de rinçage comprenant un corps de base allongé formant un cylindre creux à l'intérieur duquel est disposé un accélérateur de flux d'eau de rinçage. Cependant, ce répartiteur d'eau de rinçage est complexe à réaliser du fait de la présence interne de plusieurs segments transversaux, qui ont en outre pour inconvénient de créer des pertes de charge susceptibles de provoquer un reflux en amont au niveau du disconnecteur dans le cas d'une alimentation par robinet poussoir, comme cela est souvent le cas dans les lieux publics. La demande de brevet européen EP3453805A1 divulgue également un répartiteur d'eau avec des segments rapportés présentant les mêmes inconvénients.

Un système de rinçage est décrit par exemple dans le US2012/175437A et un ensemble comprenant une cuvette de wc et un système de rinçage est décrit par exemple dans le US2192110A.

La présente invention vise à résoudre les inconvénients de l'état antérieur de la technique, en proposant un système de rinçage pour cuvette de wc comprenant une boîte d'alimentation réalisée sous la forme d'un corps monobloc avec une entrée d'eau de section circulaire, laquelle se prolonge ensuite par une forme oblongue ou elliptique dont la section transversale est constante, ce qui permet d'accélérer et d'orienter le flux d'eau de rinçage sans qu'il soit nécessaire d'insérer des ailettes ou autre dispositif de dispersion du flux comme on le voit dans les dispositifs antérieurs, la boîte d'alimentation comprenant en outre une façade de fixation en périphérie de la sortie d'eau de section oblongue ou elliptique pour faciliter la fixation sur la cuvette de wc, ce système permettant de garantir une parfaite qualité de rinçage du bol de la cuvette de wc et de faciliter grandement la fabrication de la cuvette de wc, qu'elle soit réalisée en céramique, en acier inoxydable ou en matériau composite.

La présente invention a donc pour objet un système de rinçage pour cuvette de wc selon la revendication 1.

Ainsi, le corps monobloc de la boîte d'alimentation de la présente invention est simple à réaliser, ce qui permet d'en réduire la complexité et les coûts de fabrication.

La section oblongue ou elliptique de la sortie d'eau permet d'éviter les pertes de charge à la sortie de la boîte d'alimentation, ce qui permet de garantir une parfaite qualité de rinçage du bol de la cuvette de wc.

Préférablement, la façade de fixation, qui fait partie intégrante de la boîte d'alimentation, est incurvée pour épouser la forme extérieure de la cuvette de wc.

La fixation de la boîte d'alimentation directement sur la cuvette de wc à l'aide de la façade de fixation permet de faciliter grandement la fabrication de la cuvette de wc, qu'elle soit réalisée en céramique, en acier inoxydable ou en matériau composite.

Selon une caractéristique particulière de l'invention, la façade de fixation comporte plusieurs trous traversants de manière à permettre la fixation de la boîte d'alimentation sur la cuvette de wc par vissage.

Selon une caractéristique particulière de l'invention, la boîte d'alimentation comprend en outre un joint d'étanchéité disposé contre la façade de fixation, ledit joint d'étanchéité comprenant une ouverture ménagée en regard de la sortie d'eau et dont la section est similaire à celle de la sortie d'eau.

Ainsi, le joint d'étanchéité, qui est de préférence un joint de forme en élastomère, permet d'assurer l'étanchéité entre la boîte d'alimentation et la cuvette de wc lorsque la façade de fixation est fixée sur la cuvette de wc. Concomitamment, plusieurs trous traversants sont ménagés dans ledit joint d'étanchéité, en regard des trous traversants ménagés dans la façade de fixation, pour permettre le passage des vis de fixation.

Avantageusement, un logement est ménagé dans la façade de fixation pour recevoir ledit joint d'étanchéité.

Selon une caractéristique particulière de l'invention, le corps monobloc comprend en outre une équerre de fixation disposée au-dessus de l'entrée d'eau, ladite équerre de fixation comportant au moins un trou traversant de manière à en permettre la fixation par vissage sous le rebord supérieur de la cuvette de wc.

Ainsi, l'équerre de fixation permet de garantir, à l'aide d'une vis, le maintien de la boîte d'alimentation en position sensiblement horizontale sous le rebord supérieur de la cuvette de wc. Avantageusement, l'équerre de fixation s'étend plus loin que l'entrée d'eau afin de faciliter le serrage de ladite vis.

Selon une caractéristique particulière de l'invention, le corps monobloc est réalisé en matière plastique, de préférence en matière plastique recyclée.

La présente invention a en outre pour objet un ensemble selon la revendication 6.

Typiquement, l'orifice d'arrivée d'eau de rinçage est ménagé à l'arrière de la cuvette de wc sous le rebord supérieur de la cuvette de wc (à quelques centimètres de l'assise de la cuvette de wc).

Selon un premier mode de réalisation de la présente invention, la cuvette de wc est du type sans gorge, un déflecteur étant disposé à l'intérieur de la cuvette de wc en regard de l'orifice d'arrivée d'eau de rinçage, l'intérieur de la cuvette de wc comprenant en outre un ressaut ménagé sur le pourtour intérieur de la cuvette de wc sous l'orifice d'arrivée d'eau de rinçage, le déflecteur et le ressaut étant configurés pour répartir uniformément dans la cuvette de wc l'eau de rinçage sortant de l'orifice d'arrivée d'eau de rinçage en provenance de la boîte d'alimentation.

Ainsi, l'eau de rinçage sortant de la boîte d'alimentation et entrant dans la cuvette de wc par l'intermédiaire de l'orifice d'arrivée d'eau de rinçage est déviée, par le déflecteur, vers le ressaut sensiblement horizontal ménagé sur le pourtour intérieur de la cuvette de wc, ce qui permet de répartir uniformément l'eau de rinçage à l'intérieur de la cuvette de wc pour garantir une parfaite qualité de rinçage du bol de la cuvette de wc.

Selon une caractéristique particulière du premier mode de réalisation, la partie supérieure du déflecteur est en contact avec la surface intérieure de la cuvette de wc et comporte deux trous taraudés ménagés en regard de deux trous traversants formés dans la cuvette de wc au-dessus de l'orifice d'arrivée d'eau de rinçage de manière à permettre la fixation par vissage du déflecteur dans la cuvette de wc, un joint d'étanchéité étant disposé entre la surface intérieure de la cuvette de wc et la partie supérieure du déflecteur.

Ainsi, le déflecteur est une pièce rapportée sur le bol de la cuvette de wc. Il est à noter que le déflecteur pourrait également être partie intégrante de la cuvette de wc, sans s'écarter du cadre de la présente invention.

Le joint d'étanchéité permet d'assurer l'étanchéité entre la partie supérieure du déflecteur et la cuvette de wc et ainsi d'éviter que de l'eau de rinçage ne s'échappe vers le haut.

Avantageusement, un logement est ménagé dans la partie supérieure du déflecteur pour recevoir ledit joint d'étanchéité.

Selon une caractéristique particulière du premier mode de réalisation, les deux trous traversants formés dans la cuvette de wc au-dessus de l'orifice d'arrivée d'eau de rinçage sont en regard de deux trous traversants supérieurs formés dans la façade de fixation de la boîte d'alimentation, la cuvette de wc comportant en outre deux tiges filetées collées ou soudées sur sa surface extérieure en dessous de l'orifice d'arrivée d'eau de rinçage, lesdites deux tiges filetées traversant deux trous traversants inférieurs formés dans la façade de fixation, la façade de fixation étant fixée contre la cuvette de wc à l'aide de deux vis vissées dans les deux trous taraudés ménagés dans la partie supérieure du déflecteur et à l'aide de deux écrous vissés sur les deux tiges filetées disposées au-dessous de l'orifice d'arrivée d'eau de rinçage.

Ainsi, les deux vis qui permettent la fixation de la façade de fixation sur la cuvette de wc permettent également la fixation du déflecteur dans la cuvette de wc.

Selon une caractéristique particulière du premier mode de réalisation, la partie inférieure du déflecteur possède un évidement longitudinal concave en regard de l'orifice d'arrivée d'eau de rinçage, l'extrémité inférieure du déflecteur se trouvant sous le ressaut de la cuvette de wc et comportant au moins un point d'appui avec la cuvette de wc pour garantir un interstice régulier entre la partie inférieure du déflecteur et la cuvette de wc, l'évidement longitudinal concave débouchant de part et d'autre du déflecteur par deux orifices latéraux disposés au niveau du ressaut. Ceci permet ainsi la formation d'un rideau d'eau vertical de rinçage contre la paroi du bol, tout en assurant un débit suffisant par les deux orifices latéraux ménagés de part et d'autre du déflecteur en regard du ressaut sensiblement horizontal ménagé à l'intérieur du bol.

Ainsi, l'évidement longitudinal concave ménagé dans la partie inférieure du déflecteur permet d'avoir un interstice régulier en regard de la forme de la cuvette de wc, tout en permettant de dévier la majeure partie de l'eau de rinçage vers le ressaut uniformément des deux côtés du déflecteur.

L'au moins un point d'appui permet de garantir la dimension de l'interstice lors du serrage des boulons dans les trous taraudés de la partie supérieure du déflecteur.

Selon un second mode de réalisation de la présente invention, la cuvette de wc est du type avec gorge, ladite cuvette de wc comprenant une gorge formée sur le pourtour intérieur de la partie supérieure de la cuvette de wc, l'orifice d'arrivée d'eau de rinçage étant ménagé en regard de ladite gorge qui est configurée pour répartir uniformément dans la cuvette de wc l'eau de rinçage sortant de l'orifice d'arrivée d'eau de rinçage en provenance de la boîte d'alimentation.

Ainsi, l'eau de rinçage sortant de l'orifice d'arrivée d'eau de rinçage de section oblongue ou elliptique est projetée contre la gorge puis est répartie uniformément dans la cuvette de wc par l'intermédiaire de la gorge, ce qui permet de garantir une parfaite qualité de rinçage du bol de la cuvette de wc. Selon une caractéristique particulière du second mode de réalisation, la cuvette de wc comporte des tiges filetées collées ou soudées sur sa surface extérieure, lesdites tiges filetées traversant les trous traversants formés dans la façade de fixation de la boîte d'alimentation, la façade de fixation étant fixée contre la cuvette de wc à l'aide d'écrous vissés sur les tiges filetées.

Pour mieux illustrer l'objet de la présente invention, on va en décrire ci-après, à titre illustratif et non limitatif, deux modes de réalisation préférés, avec référence aux dessins annexés.

Sur ces dessins :
[Fig. 1] est une vue en perspective de dessous d'un ensemble cuvette de wc - système de rinçage selon un premier mode de réalisation de la présente invention ;
[Fig. 2] est une vue en perspective de dessus de l'ensemble cuvette de wc - système de rinçage de la Figure 1 ;
[Fig. 3] est une vue éclatée de l'ensemble cuvette de wc - système de rinçage de la Figure 1 ;
[Fig. 4] est un grossissement d'une vue en coupe de l'ensemble cuvette de wc - système de rinçage de la Figure 1 au niveau de l'orifice d'arrivée d'eau de rinçage de la cuvette de wc ;
[Fig. 5] est une vue en perspective de dessous d'un ensemble cuvette de wc-système de rinçage selon un second mode de réalisation de la présente invention ;
[Fig. 6] est une vue en perspective de dessus de l'ensemble cuvette de wc - système de rinçage de la Figure 5 ;
[Fig. 7] est une vue éclatée de l'ensemble cuvette de wc - système de rinçage de la Figure 5 ;
[Fig. 8a] est une vue en coupe de l'ensemble cuvette de wc - système de rinçage de la Figure 5 ;
[Fig. 8b] est un grossissement de la Figure 8a au niveau de l'orifice d'arrivée d'eau de rinçage de la cuvette de wc ; et
[Fig. 9] est une vue en coupe de l'ensemble cuvette de wc - système de rinçage de la Figure 5 au niveau de la boîte d'alimentation.

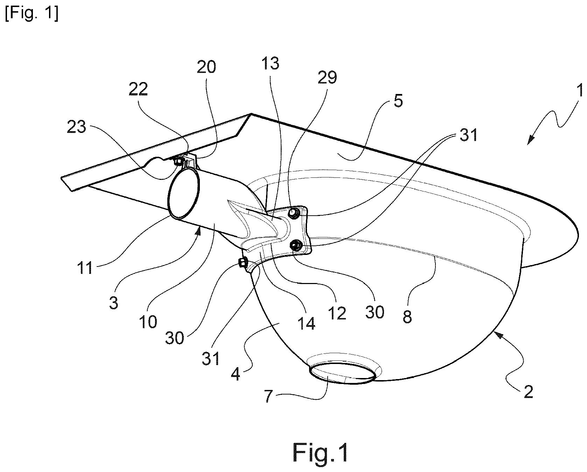

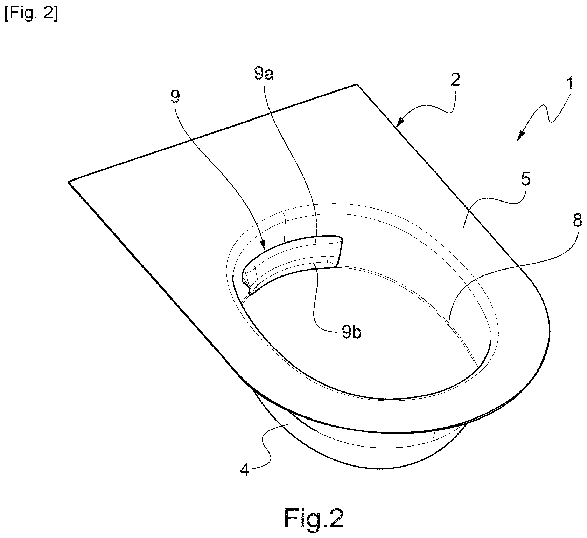

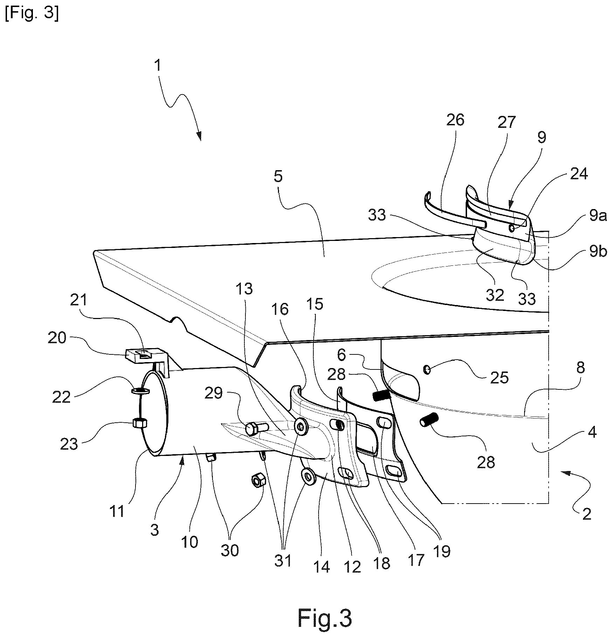

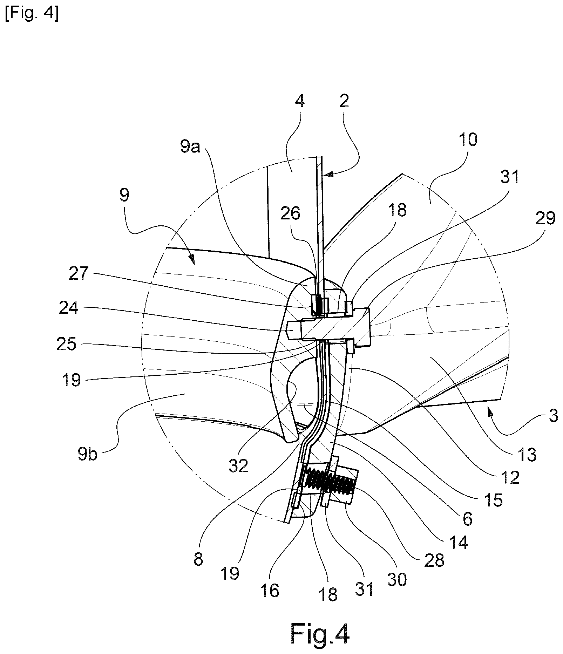

Si l'on se réfère aux Figures 1 à 4, on peut voir qu'il y est représenté un ensemble cuvette de wc - système de rinçage 1 selon un premier mode de réalisation de la présente invention.

L'ensemble cuvette de wc - système de rinçage 1 comprend une cuvette de wc 2 du type sans gorge et un système de rinçage comprenant une boîte d'alimentation 3 pour le rinçage de la cuvette de wc 2.

La cuvette de wc 2 comprend un bol 4 et un rebord supérieur 5 horizontal formé en partie supérieure du bol 4, ledit rebord supérieur 5 pouvant servir d'assise pour l'utilisateur.

Un orifice d'arrivée d'eau de rinçage 6 de section oblongue est ménagé à l'arrière du bol 4, à quelques centimètres sous le rebord supérieur 5 de la cuvette de wc 2.

Il est à noter que l'orifice d'arrivée d'eau de rinçage 6 pourrait également être de section elliptique, sans s'écarter du cadre de la présente invention.

De façon connue, un orifice d'évacuation d'eau de rinçage 7 est ménagé en partie inférieure du bol 4.

L'intérieur de la cuvette de wc 2 comprend en outre un ressaut 8 horizontal ménagé sur le pourtour intérieur du bol 4 au-dessous de l'orifice d'arrivée d'eau de rinçage 6.

La cuvette de wc 2 comprend en outre un déflecteur 9 disposé à l'intérieur du bol 4 de la cuvette de wc 2 en regard de l'orifice d'arrivée d'eau de rinçage 6, le déflecteur 9 et le ressaut 8 étant configurés pour répartir uniformément dans le bol 4 l'eau de rinçage sortant de l'orifice d'arrivée d'eau de rinçage 6, l'eau de rinçage s'écoulant ensuite vers l'orifice d'évacuation d'eau de rinçage 7.

La boîte d'alimentation 3 est réalisée sous la forme d'un corps monobloc 10 comportant une entrée d'eau 11 et une sortie d'eau 12 reliées entre elles par un canal formé à l'intérieur du corps monobloc 10.

Le corps monobloc 10 est réalisé en matière plastique, de préférence en matière plastique recyclée.

Il est à noter que le corps monobloc 10 pourrait également être en une quelconque autre matière, sans s'écarter du cadre de la présente invention. L'entrée d'eau 11 possède une section circulaire pour recevoir un joint à lèvre et un tuyau de chasse d'eau (non représentés sur les Figures).

La sortie d'eau 12 est disposée en regard de l'orifice d'arrivée d'eau de rinçage 6 de la cuvette de wc 2 et possède une section oblongue similaire à celle de l'orifice d'arrivée d'eau de rinçage 6.

La section circulaire du canal d'entrée d'eau s'aplatit progressivement pour prendre une forme oblongue 13 dont la section transversale est constante jusqu'à la sortie d'eau 12 de section oblongue.

La section oblongue progressive du canal 13 permet d'éviter les pertes de charge à la sortie de la boîte d'alimentation 3, ce qui permet de garantir une parfaite qualité de rinçage du bol 4 de la cuvette de wc 2.

Il est à noter que la section de la sortie d'eau 12 pourrait également être elliptique, sans s'écarter du cadre de la présente invention.

Le corps monobloc 10 comprend en outre une façade de fixation 14 sensiblement rectangulaire disposée en périphérie de la sortie d'eau 12, ladite façade de fixation 14 épousant la forme extérieure du bol 4 autour de l'orifice d'arrivée d'eau de rinçage 6 et étant fixée sur la surface extérieure du bol 4.

La boîte d'alimentation 3 comprend en outre un joint d'étanchéité 15 disposé dans un logement 16 ménagé dans la façade de fixation 14, ledit joint d'étanchéité 15 comprenant une ouverture 17 ménagée en regard de la sortie d'eau 12 et dont la section est similaire à celles de la sortie d'eau 12 et de l'orifice d'arrivée d'eau de rinçage 6, ce qui permet d'assurer l'étanchéité entre la boîte d'alimentation 3 et la cuvette de wc 2 sans risque de réduire le passage de l'eau de rinçage.

La façade de fixation 14 comporte quatre trous traversants 18, et le joint d'étanchéité 15 comporte également quatre trous traversants 19 en regard des quatre trous traversants 18 ménagés dans la façade de fixation 14, de manière à permettre la fixation de la boîte d'alimentation 3 sur la cuvette de wc 2 par vissage.

Il est à noter que la façade de fixation 14 et le joint d'étanchéité 15 pourraient également comporter un nombre quelconque de trous traversants 18 et 19, sans s'écarter du cadre de la présente invention.

Le corps monobloc 10 de la boîte d'alimentation 3 comprend en outre une équerre de fixation 20 disposée au-dessus de l'entrée d'eau 11 et comportant un trou traversant 21.

Avantageusement, une tige filetée (non visible sur les Figures) est disposée sous le rebord supérieur 5 de la cuvette de wc 2, ladite tige filetée traversant le trou traversant 21 de l'équerre de fixation 20, une rondelle 22 étant disposée sur ladite tige filetée et un écrou 23 étant vissé sur ladite tige filetée pour permettre la fixation par vissage de l'équerre de fixation 20 sous le rebord supérieur 5 de la cuvette de wc 2. Il est à noter que l'équerre de fixation 20 s'étend plus loin que l'entrée d'eau 11 afin de faciliter le serrage de l'écrou 23. La partie supérieure 9a du déflecteur 9 est en contact avec la surface intérieure du bol 4 et comporte deux trous taraudés 24 ménagés en regard de deux trous traversants 25 formés dans le bol 4 au-dessus de l'orifice d'arrivée d'eau de rinçage 6.

Un joint d'étanchéité 26 est disposé dans un logement 27 ménagé dans la partie supérieure 9a du déflecteur 9, de manière à assurer l'étanchéité entre la surface intérieure du bol 4 et la partie supérieure 9a du déflecteur 9.

Les deux trous traversants 25 formés dans la cuvette de wc 2 sont en regard des deux trous traversants 18 supérieurs formés dans la façade de fixation 14, et la cuvette de wc 2 comporte en outre deux tiges filetées 28 soudées sur la surface extérieure du bol 4 en dessous de l'orifice d'arrivée d'eau de rinçage 6, lesdites deux tiges filetées 28 traversant les deux trous traversants 18 inférieurs formés dans la façade de fixation 14.

La façade de fixation 14 est fixée contre la surface extérieure du bol 4 à l'aide de deux vis 29 vissées dans les deux trous taraudés 24 ménagés dans la partie supérieure 9a du déflecteur 9 et à l'aide de deux écrous 30 vissés sur les deux tiges filetées 28.

Des rondelles 31 sont disposées entre les vis 29 et la façade de fixation 14 et entre les écrous 30 et la façade de fixation 14.

Les deux vis 29 permettent ainsi à la fois la fixation de la façade de fixation 14 sur la cuvette de wc 2 et la fixation du déflecteur 9 dans la cuvette de wc 2.

La partie inférieure 9b du déflecteur 9 possède un évidement longitudinal concave 32 en regard de l'orifice d'arrivée d'eau de rinçage 6.

L'extrémité inférieure du déflecteur 9 se trouve sous le ressaut 8 de la cuvette de wc 2 et comporte un ou deux points d'appui 33 pour garantir un interstice régulier entre la partie inférieure 9b du déflecteur 9 et le bol 4 de manière à créer un rideau d'eau vertical tout en assurant un bon débit de rinçage par deux larges orifices latéraux ménagés à chaque extrémité de l'évidement 32, de part et d'autre du déflecteur 9.

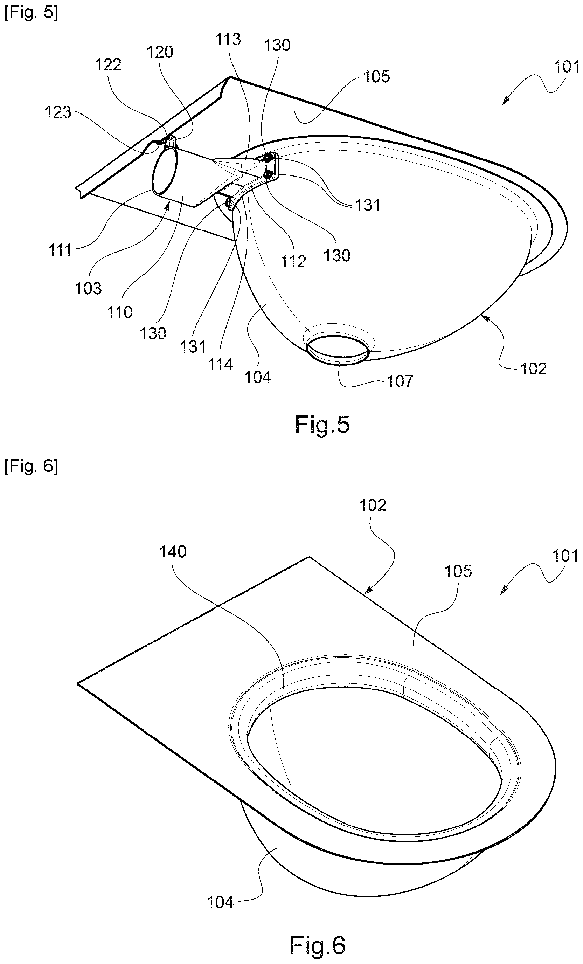

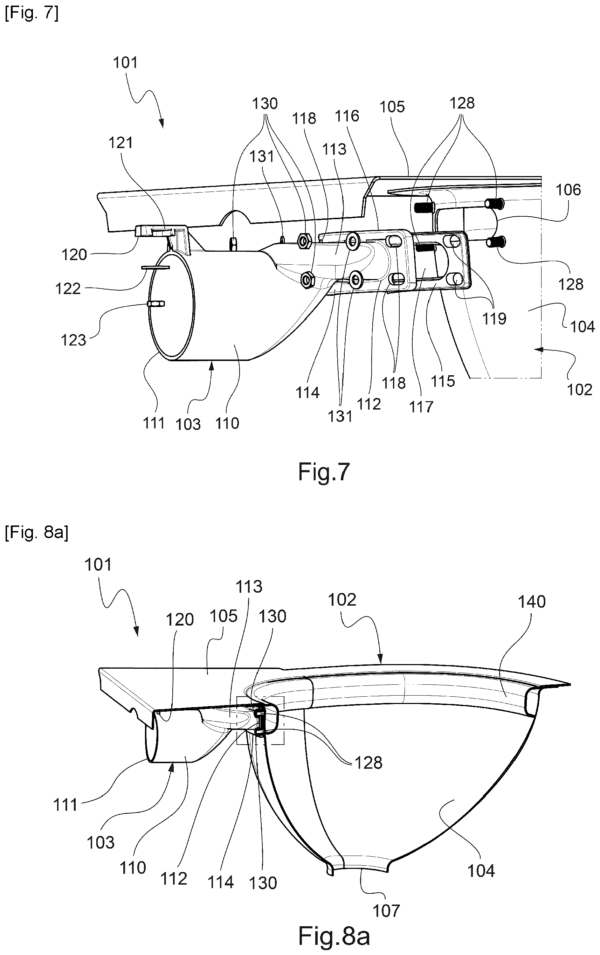

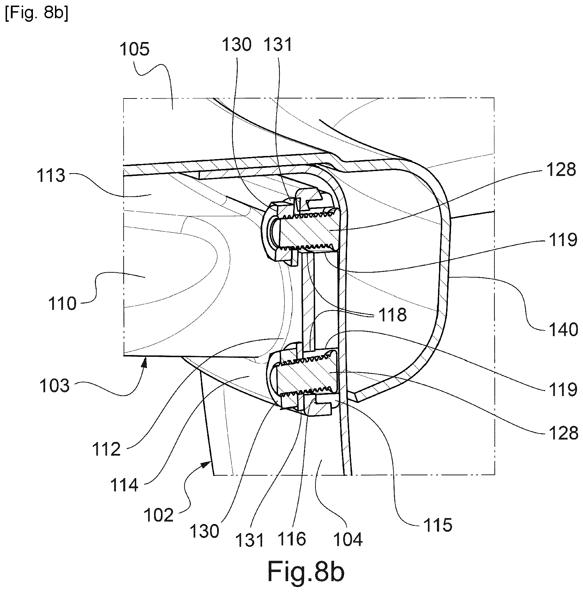

Si l'on se réfère aux Figures 5 à 9, on peut voir qu'il y est représenté un ensemble cuvette de wc - système de rinçage 101 selon un second mode de réalisation de la présente invention.

Les éléments communs entre le premier mode de réalisation de l'invention sur les Figures 1 à 4 et ce second mode de réalisation de l'invention portent le même chiffre de référence auquel on a ajouté 100 et ne seront pas décrits plus en détail ici lorsqu'ils sont de structures identiques.

Contrairement au premier mode de réalisation dans lequel la cuvette de wc 2 est du type sans gorge, la cuvette de wc 102 selon le second mode de réalisation est du type avec gorge et comprend une gorge 140 formée sur le pourtour intérieur de la partie supérieure du bol 104 de la cuvette de wc 102, l'orifice d'arrivée d'eau de rinçage 106 étant ménagé en regard de ladite gorge 140 qui est configurée pour répartir uniformément dans le bol 104 l'eau de rinçage sortant de l'orifice d'arrivée d'eau de rinçage 106 en provenance de la boîte d'alimentation 103.

La cuvette de wc 102 ne comprend donc pas de ressaut, ni de déflecteur. L'orifice d'arrivée d'eau de rinçage 106 est situé à une hauteur plus élevée par rapport au premier mode de réalisation, de telle sorte que la forme du corps monobloc 103 selon le second mode de réalisation est différente de la forme du corps monobloc 3 selon le premier mode de réalisation. Toutefois, l'invention n'est pas limitée à cet égard et la forme du corps monobloc 103 doit s'adapter à celle de la cuvette de wc 102. Dans le second mode de réalisation, la sortie d'eau 112 est située en partie haute du corps monobloc 103 de manière à être en regard de la gorge 140, tandis que, dans le premier mode de réalisation, la sortie d'eau 12 est située en partie basse du corps monobloc 3 de manière à être en regard du déflecteur 9.

L'eau de rinçage sortant de l'orifice d'arrivée d'eau de rinçage 106 est ainsi projetée contre la gorge 140, puis est répartie uniformément dans le bol 104 par l'intermédiaire de la gorge 140, ce qui permet de garantir une parfaite qualité de rinçage du bol 104.

En outre, dans le second mode de réalisation, quatre tiges filetées 131 sont soudées sur la surface extérieure du bol 104, lesdites quatre tiges filetées 104 traversant les quatre trous traversants 118 formés dans la façade de fixation 114 de la boîte d'alimentation 103, la façade de fixation 114 étant fixée contre le bol 104 de la cuvette de wc 102 à l'aide de quatre écrous 130 vissés sur les quatre tiges filetées 128, des rondelles 131 étant disposées entre les écrous 130 et la façade de fixation 114.

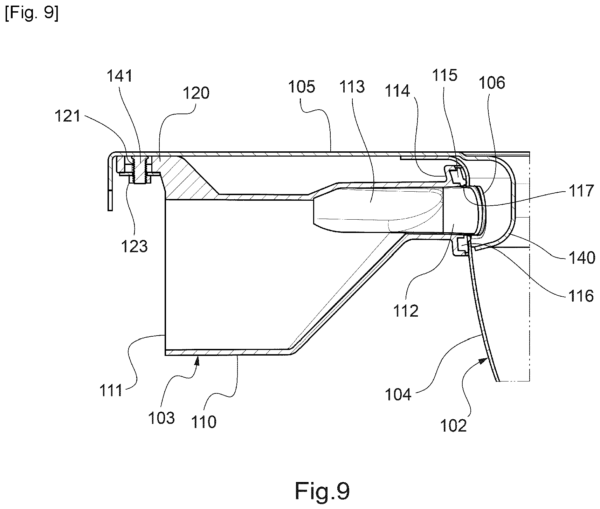

Il est à noter que la tige filetée 141 disposée sous le rebord supérieur 104 de la cuvette de wc 102 et qui permet la fixation de l'équerre de fixation 120 est visible à la Figure 9.

Un joint 115 en élastomère est disposé entre la façade de fixation 114 et le bol 104 pour assurer l'étanchéité entre eux, ladite façade de fixation 114 comportant un logement 116 pour recevoir ledit joint 115 qui comporte quatre trous traversants 119 en regard des trous traversants 118 de la façade de fixation 114 pour permettre le passage des quatre tiges filetées 128.

Il est bien entendu que les modes de réalisation particuliers qui viennent d'être décrits ont été donnés à titre indicatif et non limitatif, et que des modifications peuvent être apportées sans que l'on s'écarte pour autant de la présente invention.

## Revendications

1. - Système de rinçage pour cuvette de wc (2 ; 102). le système de rinçage comprenant une boîte d'alimentation (3 ; 103) étant réalisée sous la forme d'un corps monobloc (10 ; 110) avec une entrée d'eau (11 ; 111) et une sortie d'eau (12 ; 112) reliées entre elles par un canal, l'entrée d'eau (11 ; 111) ayant une section circulaire apte à recevoir un joint à lèvre et un tuyau de chasse d'eau, la sortie d'eau (12 ; 112) étant apte à être disposée en regard d'un orifice d'arrivée d'eau de rinçage (6 ; 106) d'une cuvette de wc (2 ; 102), la section circulaire du canal d'entrée d'eau s'aplatissant progressivement pour prendre une forme oblongue ou elliptique (13 ; 113) dont la section transversale est constante jusqu'à la sortie d'eau (12 ; 112) de section oblongue ou elliptique, le corps monobloc (10 ; 110) comprenant en outre une façade de fixation (14 ; 114) disposée en périphérie de la sortie d'eau (12 ; 112), ladite façade de fixation (14 ; 114) étant incurvée pour être apte à épouser la forme extérieure du bol de la cuvette de wc (2 ; 102) au niveau de son orifice d'arrivée d'eau de rinçage (6 ; 106) et ladite façade de fixation (14 ; 114) comportant des moyens pour assurer la fixation de ladite boîte d'alimentation (3 ; 103) sur le bol de la cuvette de wc (2 ; 102), un logement (16 ; 116) étant en outre ménagé dans la façade de fixation (14 ; 114), ledit logement (16 ; 116) étant configuré pour recevoir un joint d'étanchéité (15 ; 115).

2. - Système de rinçage selon la revendication 1, **caractérisé par le fait que** les moyens de la façade de fixation (14 ; 114) pour assurer la fixation de la boîte d'alimentation (3 ; 103) sur le bol de la cuvette de wc (2 ; 102) comportent plusieurs trous traversants (18 ; 118) formés sur la façade de fixation (14 ; 114) de manière à permettre la fixation de la boîte d'alimentation (3 ; 103) sur la cuvette de wc (2 ; 102) par vissage.

3. - Système de rinçage selon l'une des revendications 1 et 2, **caractérisé par le fait que** la boîte d'alimentation (3 ; 103) comprend en outre un joint d'étanchéité (15 ; 115) disposé contre la façade de fixation (14 ; 114) dans le logement (16 ; 116), ledit joint d'étanchéité (15 ; 115) comprenant une ouverture (17 ; 117) ménagée en regard de la sortie d'eau (12 ; 112) et dont la section est similaire à celle de la sortie d'eau (12 ; 112).

4. - Système de rinçage selon l'une des revendications 1 à 3, **caractérisé par le fait que** le corps monobloc (10 ; 110) comprend en outre une équerre de fixation (20 ; 120) disposée au-dessus de l'entrée d'eau (11 ; 111), ladite équerre de fixation (20 ; 120) comportant au moins un trou traversant (21 ; 121) de manière à en permettre la fixation par vissage sous le rebord supérieur (5 ; 105) de la cuvette de wc (2 ; 102).

5. - Système de rinçage selon l'une des revendications 1 à 4, **caractérisé par le fait que** le corps monobloc (10 ; 110) est réalisé en matière plastique, de préférence en matière plastique recyclée.

6. - Ensemble comprenant une cuvette de wc et un système de rinçage selon l'une des revendications 1 à 5, la cuvette de wc (2 ; 102) comprenant un orifice d'arrivée d'eau de rinçage (6 ; 106) dont la section est similaire à celle de la sortie d'eau (12 ; 112) de la boîte d'alimentation (3 ; 103), la façade de fixation (14 ; 114) de la boîte d'alimentation (3 ; 103) étant fixée sur la surface extérieure de la cuvette de wc (2 ; 102) de manière à ce que la sortie d'eau (12 ; 112) de la boîte d'alimentation (3 ; 103) soit en regard de l'orifice d'arrivée d'eau de rinçage (6 ; 106) de la cuvette de wc (2 ; 102).

7. - Ensemble selon la revendication 6 **caractérisé par le fait que** la cuvette de wc (2) est du type sans gorge, un déflecteur (9) étant disposé à l'intérieur de la cuvette de wc (2) en regard de l'orifice d'arrivée d'eau de rinçage (6), l'intérieur de la cuvette de wc (2) comprenant en outre un ressaut (8) ménagé sur le pourtour intérieur de la cuvette de wc (2) sous l'orifice d'arrivée d'eau de rinçage (6), le déflecteur (9) et le ressaut (8) étant configurés pour répartir uniformément dans la cuvette de wc (2) l'eau de rinçage sortant de l'orifice d'arrivée d'eau de rinçage (6) en provenance de la boîte d'alimentation (3).

8. - Ensemble selon la revendication 7 **caractérisé par le fait que** la partie supérieure (9a) du déflecteur (9) est en contact avec la surface intérieure de la cuvette de wc (2) et comporte deux trous taraudés (24) ménagés en regard de deux trous traversants (25) formés dans la cuvette de wc (2) au-dessus de l'orifice d'arrivée d'eau de rinçage (6) de manière à permettre la fixation par vissage du déflecteur (9) dans la cuvette de wc (2), un joint d'étanchéité (26) étant disposé entre la surface intérieure de la cuvette de wc (2) et la partie supérieure (9a) du déflecteur (9).

9. -Ensemble selon la revendication 8 en dépendance de la revendication 2, **caractérisé par le fait que** les deux trous traversants (25) formés dans la cuvette de wc (2) au-dessus de l'orifice d'arrivée d'eau de rinçage (6) sont en regard de deux trous traversants supérieurs (18) formés dans la façade de fixation (14) de la boîte d'alimentation (3), la cuvette de wc (2) comportant en outre deux tiges filetées (28) collées ou soudées sur sa surface extérieure en dessous de l'orifice d'arrivée d'eau de rinçage (6), lesdites deux tiges filetées (28) traversant deux trous traversants inférieurs (18) formés dans la façade de fixation (14), la façade de fixation (14) étant fixée contre la cuvette de wc (2) à l'aide de deux vis (29) vissées dans les deux trous taraudés (24) ménagés dans la partie supérieure (9a) du déflecteur (9) et à l'aide de deux écrous (30) vissés sur les deux tiges filetées (28) disposées au-dessous de l'orifice d'arrivée d'eau de rinçage (6).

10. - Ensemble selon l'une des revendications 7 à 9, **caractérisé par le fait que** la partie inférieure (9b) du déflecteur (9) possède un évidement longitudinal concave (32) en regard de l'orifice d'arrivée d'eau de rinçage (6), l'extrémité inférieure du déflecteur (9) se trouvant sous le ressaut (8) de la cuvette de wc (2) et comportant au moins un point d'appui (33) avec la cuvette de wc (2) pour garantir un interstice régulier entre la partie inférieure (9b) du déflecteur (9) et la cuvette de wc (2), l'évidement longitudinal concave (32) débouchant de part et d'autre du déflecteur (9) par deux orifices latéraux disposés au niveau du ressaut.

11. - Ensemble selon la revendication 6, **caractérisé par le fait que** la cuvette de wc (102) est du type avec gorge, ladite cuvette de wc (102) comprenant une gorge (140) formée sur le pourtour intérieur de la partie supérieure de la cuvette de wc (102), l'orifice d'arrivée d'eau de rinçage (106) étant ménagé en regard de ladite gorge (140) qui est configurée pour répartir uniformément dans la cuvette de wc (102) l'eau de rinçage sortant de l'orifice d'arrivée d'eau de rinçage (106) en provenance de la boîte d'alimentation (103).

12. - Ensemble selon la revendication 11 en dépendance de la revendication 2, **caractérisé par le fait que** la cuvette de wc (102) comporte des tiges filetées (128) collées ou soudées sur sa surface extérieure, lesdites tiges filetées (128) traversant les trous traversants (118) formés dans la façade de fixation (114) de la boîte d'alimentation (103), la façade de fixation (114) étant fixée contre la cuvette de wc (102) à l'aide d'écrous (130) vissés sur les tiges filetées (128).

## Patentansprüche

1. - Spülsystem für WC-Schüssel (2; 102), wobei das Spülsystem einen Einspeisungskasten (3; 103) umfasst, der in Form eines einstückigen Körpers (10; 110) mit einem Wassereintritt (11; 111) und einem Wasseraustritt (12; 112) durchgeführt ist, die untereinander durch einen Kanal verbunden sind, wobei der Wassereintritt (11; 111) einen kreisförmigen Schnitt aufweist, der ausgelegt ist, um eine Lippendichtung und ein Toilettenspülungsrohr aufzunehmen, wobei der Wasseraustritt (12; 112) ausgelegt ist, um gegenüber einer Spülwasserzufuhröffnung (6; 106) einer WC-Schüssel (2; 102) angeordnet zu sein, wobei sich der kreisförmige Schnitt des Wassereintrittskanals fortschreitend abflacht, um eine längliche oder elliptische Form (13; 113) anzunehmen, deren Querschnitt bis zum Wasseraustritt (12; 112) mit länglichem oder elliptischem Schnitt konstant ist, wobei der einstückige Körper (10; 110) außerdem eine Befestigungsfassade (14; 114) umfasst, die am Umfang des Wasseraustritts (12; 112) angeordnet ist, wobei die Befestigungsfassade (14; 114) gekrümmt ist, um ausgelegt zu sein, die äußere Form der Schale der WC-Schüssel (2; 102) auf der Ebene seiner Spülwasserzufuhröffnung (6; 106) anzunehmen, und wobei die Befestigungsfassade (14; 114) Mittel umfasst, um die Befestigung des Einspeisungskastens (3; 103) auf der Schale der WC-Schüssel (2; 102) sicherzustellen, wobei eine Aufnahme (16; 116) außerdem in der Befestigungsfassade (14; 114) angebracht ist, wobei die Aufnahme (16; 116) konfiguriert ist, um eine Dichtung (15; 115) aufzunehmen.

2. - Spülsystem nach Anspruch 1, **dadurch gekennzeichnet, dass** die Mittel der Befestigungsfassade (14; 114), um die Befestigung des Einspeisungskastens (3; 103) auf der Schale der WC-Schüssel (2; 102) sicherzustellen, mehrere Durchgangslöcher (18; 118) umfassen, die auf der Befestigungsfassade (14; 114) gebildet sind, um die Befestigung des Einspeisungskastens (3; 103) auf der WC-Schüssel (2; 102) durch Verschraubung zu ermöglichen.

3. - Spülsystem nach einem der Ansprüche 1 und 2, **dadurch gekennzeichnet, dass** der Einspeisungskasten (3; 103) außerdem eine Dichtung (15; 115) umfasst, die gegen die Befestigungsfassade (14; 114) in der Aufnahme (16; 116) angeordnet ist, wobei die Dichtung (15; 115) eine Öffnung (17; 117) umfasst, die gegenüber dem Wasseraustritt (12; 112) angebracht ist, und wobei der Schnitt ähnlich demjenigen des Wasseraustritts (12; 112) ist.

4. - Spülsystem nach einem der Ansprüche 1 bis 3, **dadurch gekennzeichnet, dass** der einstückige Körper (10; 110) außerdem einen Befestigungswinkel (20; 120) umfasst, der über dem Wassereintritt (11; 111) angeordnet ist, wobei der Befestigungswinkel (20; 120) mindestens ein Durchgangsloch (21; 121) umfasst, um daran die Befestigung durch Verschraubung unter dem oberen Rand (5; 105) der WC-Schüssel (2; 102) zu ermöglichen.

5. - Spülsystem nach einem der Ansprüche 1 bis 4, **dadurch gekennzeichnet, dass** der einstückige Körper (10; 110) aus Kunststoffmaterial durchgeführt ist, vorzugsweise aus recyceltem Kunststoffmaterial.

6. - Einheit, umfassend eine WC-Schüssel und ein Spülsystem nach einem der Ansprüche 1 bis 5, wobei die WC-Schüssel (2; 102) eine Spülwasserzufuhröffnung (6; 106) umfasst, wobei der Schnitt ähnlich demjenigen des Wasseraustritts (12; 112) des Einspeisungskastens (3; 103) ist, wobei die Befestigungsfassade (14; 114) des Einspeisungskastens (3; 103) auf der äußeren Fläche der WC-Schüssel (2; 102) derart befestigt ist, dass sich der Wasseraustritt (12; 112) des Einspeisungskastens (3; 103) gegenüber der Spülwasserzufuhröffnung (6; 106) der WC-Schüssel (2; 102) befindet.

7. - Einheit nach Anspruch 6, **dadurch gekennzeichnet, dass** die WC-Schüssel (2) vom Typ ohne Nut ist, wobei eine Ablenkvorrichtung (9) im Inneren der WC-Schüssel (2) gegenüber der Spülwasserzufuhröffnung (6) angeordnet ist, wobei das Innere der WC-Schüssel (2) außerdem einen Vorsprung (8) umfasst, der auf dem inneren Umfang der WC-Schüssel (2) unter der Spülwasserzufuhröffnung (6) angeordnet ist, wobei die Ablenkvorrichtung (9) und der Vorsprung (8) konfiguriert sind, um in der WC-Schüssel (2) gleichmäßig das Spülwasser zu verteilen, das aus der Spülwasserzufuhröffnung (6) ausgehend vom Einspeisungskasten (3) austritt.

8. - Einheit nach Anspruch 7, **dadurch gekennzeichnet, dass** der obere Teil (9a) der Ablenkvorrichtung (9) in Kontakt mit der inneren Fläche der WC-Schüssel (2) ist und zwei gewindegeschnittene Löcher (24) umfasst, die gegenüber den zwei Durchgangslöchern (25) angebracht sind, die in der WC-Schüssel (2) über der Spülwasserzufuhröffnung (6) gebildet sind, um die Befestigung durch Verschraubung der Ablenkvorrichtung (9) in der WC-Schüssel (2) zu ermöglichen, wobei eine Dichtung (26) zwischen der inneren Fläche der WC-Schüssel (2) und dem oberen Teil (9a) der Ablenkvorrichtung (9) angeordnet ist.

9. - Einheit nach Anspruch 8 in Abhängigkeit von Anspruch 2, **dadurch gekennzeichnet, dass** die zwei Durchgangslöcher (25), die in der WC-Schüssel (2) über der Spülwasserzufuhröffnung (6) gebildet sind, gegenüber von zwei oberen Durchgangslöchern (18) sind, die in der Befestigungsfassade (14) des Einspeisungskastens (3) gebildet sind, wobei die WC-Schüssel (2) außerdem zwei gewindegeschnittene Stifte (28) umfasst, die auf ihrer äußeren Fläche unter der Spülwasserzufuhröffnung (6) geklebt oder geschweißt sind, wobei die zwei gewindegeschnittenen Stifte (28) zwei untere Durchgangslöcher (18) queren, die in der Befestigungsfassade (14) gebildet sind, wobei die Befestigungsfassade (14) gegen die WC-Schüssel (2) mit Hilfe von zwei Schrauben (29) befestigt ist, die in die zwei gewindegeschnittenen Löcher (24) geschraubt sind, die im oberen Teil (9a) der Ablenkvorrichtung (9) und mit Hilfe von zwei Schraubenmuttern (30) angebracht sind, die auf die zwei gewindegschnittenen Stifte (28) geschraubt sind, die unter der Spülwasserzufuhröffnung (6) angeordnet sind.

10. - Einheit nach einem der Ansprüche 7 bis 9, **dadurch gekennzeichnet, dass** der untere Teil (9b) der Ablenkvorrichtung (9) eine konkave längliche Aussparung (32) gegenüber der Spülwasserzufuhröffnung (6) aufweist, wobei sich das untere Ende der Ablenkvorrichtung (9) unter dem Vorsprung (8) der WC-Schüssel (2) befindet und mindestens einen Auflagepunkt (33) mit der WC-Schüssel (2) umfasst, um einen regelmäßigen Zwischenraum zwischen dem unteren Teil (9b) der Ablenkvorrichtung (9) und der WC-Schüssel (2) zu garantieren, wobei die konkave längliche Aussparung (32) auf beiden Seiten der Ablenkvorrichtung (9) durch zwei seitliche Öffnungen mündet, die auf der Ebene des Vorsprungs angeordnet sind.

11. - Einheit nach Anspruch 6, **dadurch gekennzeichnet, dass** die WC-Schüssel (102) vom Typ mit Nut ist, wobei die WC-Schüssel (102) eine Nut (140) umfasst, die auf dem inneren Umfang des oberen Teils der WC-Schüssel (102) gebildet ist, wobei die Spülwasserzufuhröffnung (106) gegenüber der Nut (140) angeordnet ist, die konfiguriert ist, um in der WC-Schüssel (102) gleichmäßig das Spülwasser zu verteilen, das aus der Spülwasserzufuhröffnung (106) ausgehend vom Einspeisungskasten (103) austritt.

12. - Einheit nach Anspruch 11 in Abhängigkeit von Anspruch 2, **dadurch gekennzeichnet, dass** die WC-Schüssel (102) gewindegeschnittene Stifte (128) umfasst, die auf ihrer äußeren Fläche geklebt oder geschweißt sind, wobei die gewindegeschnittenen Stifte (128) die Durchgangslöcher (118) queren, die in der Befestigungsfassade (114) des Einspeisungskastens (103) gebildet sind, wobei die Befestigungsfassade (114) gegen die WC-Schüssel (102) mit Hilfe von Schraubenmuttern (130) fixiert ist, die auf die gewindegschnittenen Stifte (128) geschraubt sind.

## Claims

1. - A flushing system for a toilet bowl (2; 102), the flushing system comprising a supply box (3; 103) being formed as a one-piece body (10; 110) with a water inlet (11; 111) and a water outlet (12; 112) connected to each other by a channel, the water inlet (11; 111) having a circular section adapted to receive a lip seal and a flush pipe, the water outlet (12; 112) being adapted to be disposed opposite a flushing water inlet (6; 106) of a toilet bowl (2; 102), the circular section of the water inlet channel flattening progressively to take on an oblong or elliptical shape (13; 113), the cross-section of which is constant up to the water outlet (12; 112) of oblong or elliptical section, the one-piece body (10; 110) further comprising a fastening front panel (14; 114) arranged at the periphery of the water outlet (12; 112), said fastening front panel (14; 114) being curved so as to be able to match the external shape of the bowl of the toilet bowl (2; 102) at its flushing water inlet (6; 106) and said fastening front panel (14; 114) comprising means for securing said supply box (3; 103) to the bowl of the toilet bowl (2; 102), a housing (16; 116) being further provided in the fastening front panel (14; 114), said housing (16; 116) being configured to house a seal (15; 115).

2. - The flushing system according to claim 1, **characterised in that** the means of the fastening front panel (14; 114) for securing the supply box (3; 103) to the bowl of the toilet bowl (2; 102) comprise several through holes (18; 118) formed on the fastening front panel (14; 114) so as to allow the supply box (3; 103) to be fixed to the toilet bowl (2; 102) by screwing.

3. - The flushing system according to one of claims 1 and 2, **characterised in that** the supply box (3; 103) further comprises a seal (15; 115) arranged against the fastening front panel (14; 114) in the housing (16; 116), said seal (15; 115) comprising an opening (17; 117) formed opposite the water outlet (12; 112) and having a section similar to that of the water outlet (12; 112).

4. - The flushing system according to one of claims 1 to 3, **characterised in that** the one-piece body (10; 110) further comprises a fixing bracket (20; 120) arranged above the water inlet (11; 111), said fixing bracket (20; 120) comprising at least one through hole (21; 121) so as to allow its fixing by screwing under the upper rim (5; 105) of the toilet bowl (2; 102).

5. - The flushing system according to one of claims 1 to 4, **characterised in that** the one-piece body (10; 110) is made of plastic, preferably recycled plastic.

6. - An assembly comprising a toilet bowl and a flushing system according to one of claims 1 to 5, the toilet bowl (2; 102) comprising a flushing water inlet (6; 106) the section of which is similar to that of the water outlet (12; 112) of the supply box (3; 103), the fastening front panel (14 ; 114) of the supply box (3; 103) being fixed to the outer surface of the toilet bowl (2; 102) such that the water outlet (12; 112) of the supply box (3; 103) faces the flushing water inlet (6; 106) of the toilet bowl (2; 102).

7. - The assembly according to claim 6, **characterised in that** the toilet bowl (2) is of rimless type, a deflector (9) being arranged inside the toilet bowl (2) opposite the flushing water inlet (6), the interior of the toilet bowl (2) further comprising a shoulder (8) provided on the inner periphery of the toilet bowl (2) below the flushing water inlet (6), the deflector (9) and the shoulder (8) being configured to distribute the flushing water exiting from the flushing water inlet (6) from the supply box (3) uniformly in the toilet bowl (2).

8. - The assembly according to claim 7, **characterised in that** the upper part (9a) of the deflector (9) is in contact with the inner surface of the toilet bowl (2) and comprises two threaded holes (24) arranged opposite two through holes (25) formed in the toilet bowl (2) above the flushing water inlet (6) so as to allow the deflector (9) to be fixed by screwing into the toilet bowl (2), a seal (26) being arranged between the inner surface of the toilet bowl (2) and the upper part (9a) of the deflector (9) .

9. - The assembly according to claim 8 in dependence on claim 2, **characterised in that** the two through holes (25) formed in the toilet bowl (2) above the flushing water inlet (6) are opposite two upper through holes (18) formed in the fastening front panel (14) of the supply box (3), the toilet bowl (2) further comprising two threaded rods (28) glued or welded to its outer surface below the flushing water inlet (6), said two threaded rods (28) passing through two lower through-holes (18) formed in the fastening front panel (14), the fastening front panel (14) being fixed against the toilet bowl (2) by means of two screws (29) screwed into the two threaded holes (24) provided in the upper part (9a) of the deflector (9) and by means of two nuts (30) screwed onto the two threaded rods (28) arranged below the flushing water inlet (6).

10. - The assembly according to one of claims 7 to 9, **characterised in that** the lower part (9b) of the deflector (9) has a concave longitudinal recess (32) opposite the flushing water inlet (6), the lower end of the deflector (9) being located below the shoulder (8) of the toilet bowl (2) and having at least one bearing point (33) with the toilet bowl (2) in order to ensure a uniform gap between the lower part (9b) of the deflector (9) and the toilet bowl (2), the concave longitudinal recess (32) opening out on either side of the deflector (9) via two lateral ports arranged at the shoulder.

11. - The assembly according to claim 6, **characterised in that** the toilet bowl (102) is of the type with a rim, said toilet bowl (102) comprising a rim (140) formed on the inner periphery of the upper part of the toilet bowl (102), the flushing water inlet (106) being provided opposite said rim (140) which is configured to evenly distribute the flushing water exiting the flushing water inlet (106) from the supply box (103) into the toilet bowl (102).

12. - The assembly according to claim 11 in dependence on claim 2, **characterised in that** the toilet bowl (102) has threaded rods (128) glued or welded to its outer surface, said threaded rods (128) passing through the through holes (118) formed in the fastening front panel (114) of the supply box (103), the fastening front panel (114) being fixed against the toilet bowl (102) by means of nuts (130) screwed onto the threaded rods (128).
